# EUROPÄISCHE PATENTSCHRIFT

(11) **EP 4 628 289 B1**
(45) Veröffentlichungstag und Bekanntmachung des Hinweises auf die Patenterteilung: **23.09.2026**
(21) Anmeldenummer: 25179175.2
(22) Anmeldetag: 01.04.2021
(51) Int. Cl.: B29C 70/56, B29C 70/86, B29C 70/74

(54) **HERSTELLUNGSVERFAHREN ZUM HERSTELLEN EINES ENDLOSFASERVERSTÄRKTEN BAUTEILS**
METHOD FOR PRODUCING A CONTINUOUS FIBRE-REINFORCED COMPONENT
PROCÉDÉ DE FABRICATION D'UN COMPOSANT RENFORCÉ PAR DES FIBRES CONTINUES

(30) Priorität: 07.04.2020 DE 102020109741
(43) Veröffentlichungstag der Anmeldung: 08.10.2025
(62) Dokumentnummer(n) der früheren Anmeldung(en) nach Art. 76 EPÜ: 21166529.4 / 3 892 451
(73) Patentinhaber: Airbus (S.A.S.), 31700 Blagnac (FR)
(72) Erfinder: Metzner, Christian, 82024 Taufkirchen (DE); Beier, Uwe, 82024 Taufkirchen (DE)
(74) Vertreter: KASTEL Patentanwälte PartG mbB

(56) Entgegenhaltungen:
- EP-A1- 3 231 592
- WO-A1-2017/202669
- DE-A1- 102005 005 729
- DE-A1- 102005 024 408

## Beschreibung

Die Erfindung betrifft ein Herstellungsverfahren.

Faserverstärkte Verbundteile werden gewöhnlich mit mehr oder weniger angepasster Faserorientierung hergestellt. Dabei können Verbundbauteile nicht nur Kunststoff- oder Polymermaterialien enthalten. Auch Verbundbauteile aus Metall bzw. Leichtmetall und Fasern sind denkbar. Die Möglichkeiten der Anpassung werden in der Regel innerhalb der Grenzen des Fertigungsprozesses ausgeschöpft. Dies kann jedoch zu einer aufwendigeren Fertigung führen, insbesondere dann, wenn ein hoher Grad an Faserorientierung erreicht werden soll; dies ist allgemein mit komplexeren oder langsameren Fertigungsverfahren verbunden. Verbesserte Fertigungsverfahren, die den Grad der Faserorientierung erhöhen, sind beispielsweise 3D-Druck, Überspritzen bzw. Übergießen von Faserpanzern, Faserwickeln um metallene Ösen oder Laschen, Formpressen von kohlenstofffaserverstärkten Polymerhalbzeugen.

Aus EP 3 769 945 A1, die Stand der Technik nach Art. 54(3) EPÜ ist, ist ein Verfahren bekannt, bei dem Endlosfasern in ausgerichtete rohrförmige Öffnungen des Bauteils eingebracht werden, indem Harz und Endlosfasern zusammen eingespritzt werden. Der Inhalt der EP 3 769 945 A1 wird zu Offenbarungszwecken durch Verweis in die hiesige Anmeldung miteinbezogen.

EP 3 231 592 A1 offenbart ein Verfahren zur Herstellung eines Teils aus Verbundmaterial, das einen Körper und ein oder mehrere Endlosfaserbündel in seinem Inneren aufweist. Der Körper hat in seinem Inneren einen oder mehrere röhrenförmige Hohlräume, die sich zwischen einem ersten Ende, das an der Außenfläche des Körpers angeordnet ist und eine Eintrittsöffnung aufweist, und einem zweiten Ende, das dem ersten Ende gegenüberliegt, erstrecken. Harz in flüssigem Zustand und ein Endlosfaserbündel werden in das Innere des röhrenförmigen Hohlraums durch dessen Eintrittsöffnung eingebracht. Anschließend wird das Harz bis zur Verfestigung ausgehärtet.

DE 10 2005 024 408 A1 offenbart ein Verfahren zur Verstärkung von Schaumwerkstoffen, bei dem ein Schaumwerkstoff mit Faserbündeln versehen wird, die mit einer Nadel in den Schaumwerkstoff eingebracht werden.

DE 10 2005 005 729 A1 offenbart eine Verstärkung von stranggepressten oder stranggezogenen Profilen, deren rohrförmigen Kanäle mit Faserverbundwerkstoffen versehen werden.

WO 2017 / 202 669 A1 offenbart einen Formkörper, der einen Schaumstoff und mindestens eine Faser umfasst. Die Faser wird mittels einer Nadel von einer Seite durch den Formkörper hindurch auf eine gegenüberliegende Seite gezogen. Dieses Vorgehen wird an benachbarten Stellen wiederholt.

Der Erfindung liegt die Aufgabe zugrunde, derartige Fertigungsverfahren hinsichtlich ihrer Anwendungsvielfalt zu verbessern, insbesondere das Einbringen von Fasern in eine größere Anzahl Geometrien zu ermöglichen.

Die Aufgabe wird durch den Gegenstand des Anspruchs 1 gelöst. Bevorzugte Weiterbildungen sind Gegenstand der abhängigen Ansprüche.

Die Erfindung schafft ein Herstellungsverfahren zum Herstellen eines Bauteils aus einem Verbundwerkstoff mit einer aus Faserbündeln und Harz gebildeten Faserverstärkung, wobei das Verfahren die Schritte umfasst:
a) Bereitstellen eines Bauteilkorpus mit einer Mehrzahl von rohrartigen Hohlräumen;
b) Einbringen von Harz und einer Zugvorrichtung für die Faserbündel in wenigstens einen der Hohlräume, wobei die Zugvorrichtung wenigstens ein Zugmittel aufweist, das ausgebildet ist, die Faserbündel zu ziehen und Druckkraft zu übertragen;
c) mittels des wenigstens einen Zugmittels, Einziehen wenigstens eines Faserbündels in den Hohlraum.

Es ist bevorzugt, dass Schritt a) umfasst:
- Ausbilden des Bauteilkorpus mit einem ersten Bereich aus einem ersten Polymermaterial und mit einem zweiten Bereich aus einem zweiten Polymermaterial.

Es ist bevorzugt, dass Schritt a) umfasst:
- Auswählen eines ersten Polymermaterials aus einer Gruppe von Materialien, die in einem Lösungsmittel oder mechanisch, vorzugsweise durch Abbauen oder Brechen ("break away"), lösbar sind, und Auswählen eines zweiten Polymermaterials aus einer Gruppe von Materialien, die in dem Lösungsmittel nicht lösbar sind.

Es ist bevorzugt, dass Schritt a) umfasst:
- Auswählen des Metallmaterials aus einer Gruppe, die Metalle, beispielsweise Stahl, und Leichtmetalle, beispielsweise Aluminium oder Titan, oder jeweilige Legierungen enthält.

Es ist bevorzugt, dass Schritt a) umfasst:
- Herstellen des Bauteilkorpus durch additive Schichtfertigung.

Es ist bevorzugt, dass Schritt a) umfasst:
- Ausbilden des Bauteilkorpus mit zweiten Bereichen, die Öffnungen der Hohlräume definieren.

Es ist bevorzugt, dass Schritt a) umfasst:
- Ausbilden des Bauteilkorpus mit zweiten Bereichen, die Krümmungsbereiche der Hohlräume definieren.

Es ist bevorzugt, dass Schritt a) umfasst:
- Ausbilden des Bauteilkorpus mit zweiten Bereichen, die Abzweigungsbereiche für die Faserverstärkung definieren.

Es ist bevorzugt, dass Schritt a) umfasst:
- Ausbilden des Bauteilkorpus mit wenigstens einem ersten Bereich, der einen Mittelbereich der Hohlräume definiert.

Es ist bevorzugt, dass Schritt a) umfasst:
- Ausbilden des Bauteilkorpus mit wenigstens einem ersten Bereich, der einen geraden Abschnitt des Hohlraums definiert.

Es ist bevorzugt, dass Schritt a) umfasst:
- Ausbilden des Bauteilkorpus mit einer größeren Menge ersten Polymermaterials und einer geringeren Menge zweiten Polymermaterials.

Vorzugsweise sind wenigstens 60 Gew-%, mehr vorzugsweise 70 Gew-% bis 95 Gew-%, des Bauteilkorpus aus dem ersten Polymermaterial gebildet.

Es ist bevorzugt, dass Schritt a) umfasst:
- Ausbilden des Bauteilkorpus mit einer Mehrzahl von zweiten Bereichen, die voneinander beabstandet sind und mittels wenigstens einem ersten Bereich gekoppelt sind.

Es ist bevorzugt, dass Schritt a) umfasst:
- Ausbilden des Bauteilkorpus derart, dass wenigstens ein Hohlraum durch wenigstens einen ersten Bereich und einen zweiten Bereich hindurch verläuft.

Es ist bevorzugt, dass Schritt a) umfasst:
- Hinzufügen und/oder Verbinden eines Metallelements mit dem Bauteilkorpus derart, dass das Metallelement Öffnungen aufweist, die mit offenen Enden der Hohlräume zusammenfallen.

Es ist bevorzugt, dass Schritt b) und/oder c) umfasst:
- gleichzeitiges Einbringen des Harzes in einem ungehärteten Zustand und Einziehen des Faserbündels.

Es ist bevorzugt, dass Schritt b) und/oder c) umfasst:
- Einbringen des Harzes und Einziehen der Endlosfasern nacheinander, vorzugsweise zuerst die Endlosfasern und nachfolgend das Harz in härtbarem Zustand.

Es ist bevorzugt, dass Schritt b) umfasst:
- gemeinsames Einbringen eines ersten Zugmittels und eines zweiten Zugmittels durch dieselbe Endöffnung des Hohlraumes, wobei an einer Abzweigung des Hohlraumes das erste Zugmittel in einen von dem Hohlraum abzweigenden ersten Hohlraum eingebracht wird während das zweite Zugmittel in einen von dem Hohlraum abzweigenden zweiten Hohlraum eingebracht wird.

Es ist bevorzugt, dass Schritt b) umfasst:
- Einbringen eines ersten Zugmittels durch eine Endöffnung in einen ersten Hohlraum und eines zweiten Zugmittels durch eine Endöffnung in einen zweiten Hohlraum, wobei an einer Vereinigungsstelle des ersten mit dem zweiten Hohlraum das erste Zugmittel und das zweite Zugmittel in einen vereinigten Hohlraum zusammengeführt werden.

Es ist bevorzugt, dass Schritt b) umfasst:
- Einbringen des Zugmittels durch eine Endöffnung in einen ersten Hohlraum und Herausführen des Zugmittels aus einer Öffnung des ersten Hohlraums sowie anschließendes Einbringen des Zugmittels durch eine Öffnung in einen zweiten Hohlraum.

Es ist bevorzugt, dass Schritt c) umfasst:
- Einziehen der Faserbündel unter Anlegen eines Ultraschallfeldes vorzugsweise in einem Wasserbad.

Es ist bevorzugt, dass Schritt c) umfasst:
- Einziehen des Faserbündels derart, dass das Faserbündel teilweise außerhalb des Hohlraumes zwischen zwei Öffnungen verläuft.

Es ist bevorzugt dass Schritt c) umfasst:
- Entfernen des teilweise außerhalb des Hohlraumes verlaufenden Faserbündels.

Es ist bevorzugt, dass Schritt b) und/oder c) umfassen:
- Einbringen des Zugmittels in einen ersten Hohlraum, der mit einem zweiten Hohlraum eine Kreuzung bildet, und Einziehen eines ersten Faserbündels in den ersten Hohlraum; und nachfolgend
- Einbringen des Zugmittels in den zweiten Hohlraum über die Kreuzung hinweg, wobei vorzugsweise mit dem Zugmittel das erste Faserbündel umgangen oder durchstoßen wird, und Einziehen eines zweiten Faserbündels, so dass sich das erste Faserbündel und das zweite Faserbündel kreuzen oder durchkreuzen.

Es ist bevorzugt, dass Schritt c) umfasst:
- Einziehen eines Endlosfaserbündels in wenigstens einen Hohlraum mittels einer an das Endlosfaserbündel angelegten mechanischen Zugkraft.

Es ist bevorzugt, dass Schritt c) umfasst:
- Einziehen von Verstärkungsfasern, vorzugsweise Kohlenstofffasern und/oder Kohlenstofffaserbündel.

Es ist bevorzugt, dass Schritt c) umfasst:
- Aushärten des Harzes nach Einbringen des Harzes und der Endlosfasern in die Hohlräume.

Es ist bevorzugt, dass Schritt c) umfasst:
- Einziehen von Funktionsfasern, vorzugsweise Glasfasern und/oder Keramikfasern.

Es ist bevorzugt, dass Schritt c) umfasst:
- Einziehen von Glasfasern zum Bilden wenigstens eines Temperatur- und/oder Dehnmessstreifens.

Es ist bevorzugt, dass Schritt c) umfasst:
- Einziehen von Keramikfasern, vorzugsweise zum Bilden eines Aktors oder Sensors, mehr vorzugsweise zum Bilden eines oder mehrerer piezoelektrischer Aktoren oder Sensoren.

Es ist bevorzugt, dass der Bauteilkorpus einen ersten Bereich aus einem ersten Polymermaterial und einen zweiten Bereich aus einem zweiten Polymermaterial aufweist, wobei das erste Polymermaterial derart ausgewählt ist, dass es in einem Lösungsmittel auflösbar ist, wobei das zweite Polymermaterial derart ausgewählt ist, dass es in dem Lösungsmittel nicht auflösbar ist.

Vorzugsweise umfasst das Verfahren den Schritt:
d) zumindest teilweises Entfernen des ersten Polymermaterials durch Auflösen des ersten Polymermaterials in dem Lösungsmittel.

Es ist bevorzugt, dass Schritt d) umfasst:
- Auflösen des ersten Polymermaterials in dem Lösungsmittel.

Es ist bevorzugt, dass Schritt d) umfasst:
- Entfernen wenigstens eines ersten Bereichs.

Es ist bevorzugt, dass Schritt d) umfasst:
- Entfernen des gesamten ersten Polymermaterials von dem Bauteilkorpus.

Vorzugsweise umfasst das Verfahren den Schritt:
e) Aushärten des Harzes.

Verbundwerkstoffbauteil erhältlich durch eines der Herstellungsverfahren nach einem der vorhergehenden Ansprüche.

Vorzugsweise ist das Verbundwerkstoffbauteil als verstärkte Fachwerkstruktur ausgebildet.

Herstellungssystem zum Durchführen eines Herstellungsverfahrens nach einem der vorhergehenden Ansprüche, wobei das Herstellungssystem umfasst:
- eine additive Fertigungsvorrichtung, die zum Erstellen des Bauteils ausgebildet ist;
- eine Harzeinbringvorrichtung, die zum Einbringen von härtbarem Harz in den Hohlraum ausgebildet ist; und
- eine Zugvorrichtung, die zum Einziehen von Faserbündeln in den Hohlraum ausgebildet ist.

Zunächst kann ein unverarbeitetes Bauteil mit Hohlräumen entlang der Lastpfade bereitgestellt werden, beispielsweise durch 3D-Druck. Die Materialauswahl zwischen thermoplastischen und duromeren Polymeren kann so getroffen werden, dass eine optimierte Interdiffusionsverbindung mit den Fasern möglich ist. Ferner können Unterstrukturen per Interdiffusion angebunden werden. Denkbar ist auch ein 3D-Druck eines unverarbeiteten Bauteils mit Hohlräumen entlang der Lastpfade auf Basis von Metall, z.B. Titan, Alu, Stahl und dergleichen.

Das Fasermaterial wird nach gewünschter Funktion ausgewählt und integriert. Denkbar sind beispielsweise Verstärkungsfasern aus Kohlenstoff, Glas, Keramik und dergleichen. Die Querschnittsform der Hohlräume kann ferner an die erwartete Last angepasst werden. Die Hohlräume können somit kreisrund oder nichtrund ausgebildet sein. So dient beispielsweise ein sternförmiger Querschnitt dem verbesserten Schutz gegen Knicken. Mit dem hierin beschriebenen Verfahren können diese unterschiedlichen Querschnitte einfacher gehandhabt werden.

Das Zugmittel kann als gleitbeschichtete Stange ausgebildet sein. An dem Zugmittel können beispielsweise imprägnierte Faserbündel angebracht werden. Denkbar ist auch ein Greifer oder dergleichen. Das Einziehen ermöglicht eine Variation der Durchmesser der Hohlräume, wobei an diese angepasste Faserbündel gespleißt und eingezogen werden. Auch Abzweigungen und Vereinigungen von Hohlräumen können so mit Faserbündeln beschickt werden.

Weiter ist es möglich die Bewegung der Zugvorrichtung zu erleichtern, indem das Einziehen in einem Wasserbad und/oder mit Ultraschall unterstützt wird. Ferner können verwickelte Knoten an Kreuzungspunkten gebildet werden, indem die Faserbündel durchstoßen und ein weiteres Faserbündel durchgezogen wird.

Das gesamte Verfahren kann beschleunigt werden, wenn die Zugvorrichtung durch sämtliche Hohlräume geführt wird. Damit können in einem einzigen Schritt alle Hohlräume mit Endlosfasern durchzogen werden.

Schließlich kann das Harz ausgehärtet werden. Zudem können überflüssige Bereiche entfernt werden, beispielsweise mittels eines Lösungsmittels. Das Bauteil kann mittels additiver Fertigung erstellt werden, die insbesondere unterschiedliche Materialien gleichzeitig verwendet. Auch wenn Faserverbundwerkstoffe im Vordergrund stehen kann das hierin beschriebene Verfahren auch für Keramik- oder Metallverbundbauteile benutzt werden.

Es sollte beachtet werden, dass die Aufzählungen lediglich der besseren Bezugnahme dienen und keine Reihenfolge der Verfahrensschritte implizieren.

Ausführungsbeispiele werden anhand der beigefügten schematischen Zeichnungen näher erläutert. Darin zeigt:
- Fig. 1: ein Ausführungsbeispiel eines Bauteilkorpus;
- Fig. 2: eine Detailansicht einer Abzweigung;
- Fig. 3: eine Detailansicht einer Vereinigung;
- Fig. 4: eine Detailansicht einer Kreuzung; und
- Fig. 5: eine Ansicht eines Bauteilkorpus.

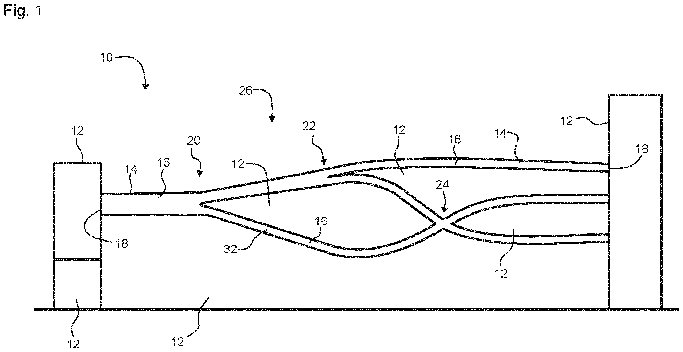

Es wird zunächst auf die Fig. 1 Bezug genommen, die ein Ausführungsbeispiel eines Bauteilkorpus 10 zeigt. Der Bauteilkorpus 10 enthält einen ersten Bereich 12. Der erste Bereich 12 ist aus einem Polymermaterial hergestellt, das in einem Lösungsmittel löslich ist. Der erste Bereich 12 kann als an sich bekannte Stütz- oder Hilfsstruktur fungieren.

Der Bauteilkorpus 10 enthält einen zweiten Bereich 14. Der zweite Bereich 14 ist aus einem Polymermaterial hergestellt, das in dem Lösungsmittel nicht löslich ist. Der zweite Bereich 14 bildet vorzugsweise die Grundstruktur des Bauteilkorpus 10, der durch Fasern verstärkt werden soll.

Der Bauteilkorpus 10 enthält eine Mehrzahl von rohrartigen Hohlräumen 16. Die rohrartigen Hohlräume 16 weisen jeweils eine Endöffnung 18 auf, mittels der die Hohlräume 16 mit der Umgebung fluidverbunden ist. Die Eigenschaften der Hohlräume 16, etwa deren Verlauf im Bauteilkorpus 10, deren Ausdehnung oder deren Querschnittsform, werden beispielsweise anhand von Lastsimulationen ermittelt.

Die Hohlräume 16 können Abzweigungen 20, Vereinigungsstellen 22 oder Kreuzungen 24 bilden.

Um ein faserverstärktes Bauteil 26 herzustellen, wird zunächst der Bauteilkorpus 10 bereitgestellt. Dies kann beispielsweise durch additive Fertigung geschehen. Der erste Bereich 12 und der zweite Bereich 14 können beispielsweise durch ein Schmelzschichtverfahren, beispielsweise filament layer manufacturing (FLM), erstellt werden.

In einem weiteren Schritt werden Faserbündel 27 in die Hohlräume 16 eingebracht. Die Faserbündel 27 können trocken oder vorimprägniert sein. Zum Einbringen der Faserbündel 27 wird zunächst eine Zugvorrichtung 28 mit wenigstens einem Zugmittel 30 bereitgestellt. Das Zugmittel 30 wird in einen der Hohlräume 16 eingeführt.

Das Zugmittel 30 ist so beschaffen, dass es einer Druckbelastung standhält. Das Zugmittel 30 ist beispielsweise als biegsame Stange oder Draht ausgebildet. Auch komplexere Zugmittel 30 mit Greifern oder mit einer Steuerbarkeit ähnlich einem Endoskop sind möglich.

Das Faserbündel 27 wird an dem Zugmittel 30 befestigt und in den Hohlraum 16 eingezogen. Ferner wird noch härtbares Harz 32 in den Hohlraum 16 eingebracht. Das Harz 32 kann von einer Harzinjektionsvorrichtung (nicht näher dargestellt) oder von der Zugvorrichtung 28 eingebracht werden. Ferner können auch die Faserbündel 27 so in dem Harz 32 getränkt sein, dass ein zusätzliches Einspritzen entfallen kann.

Das Einziehen der Faserbündel 27 erfolgt vorzugsweise unter Anlegen eines Ultraschallfeldes an den Bauteilkorpus 10. Dies kann beispielsweise in einer Flüssigkeit erfolgen, die vorzugsweise das erste Polymermaterial nicht auflöst.

Das Harz 32 wird auf an sich bekannte Art ausgehärtet. Ferner wird der erste Bereich 12 mittels Lösungsmittel entfernt.

Zurück bleibt das faserverstärkte Bauteil 26.

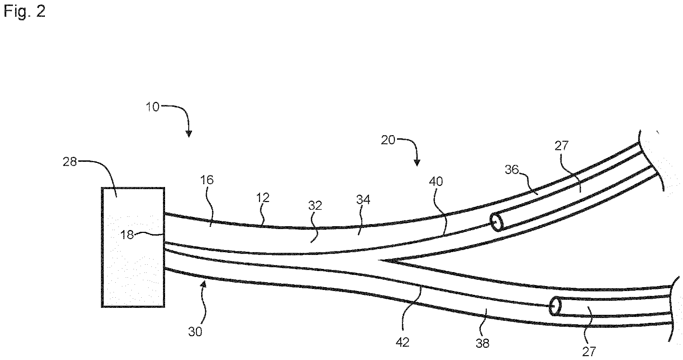

Fig. 2 zeigt eine Detailansicht einer Abzweigung 20. Die Abzweigung 20 wird von den Hohlräumen 16 gewöhnlich durch einen gemeinsamen Hohlraum 34 sowie einem ersten Hohlraum 36 und einem zweiten Hohlraum 38 gebildet, die von dem gemeinsamen Hohlraum 34 abzweigen. Auch mehr als zwei Abzweigungen sind denkbar.

Das Zugmittel 30 enthält ein erstes Zugmittel 40 und ein zweites Zugmittel 42. Zunächst werden beide Zugmittel 40, 42 in den gemeinsamen Hohlraum 34 eingeführt und anschließend in jeweils den ersten Hohlraum 36 und den zweiten Hohlraum 38 aufgeteilt.

Die Faserbündel 27 sind so gestaltet, dass die Faserbündel 27 zusammen den gemeinsamen Hohlraum 34 in gewünschter Menge füllen. Die Faserbündel 27 werden mittels des ersten und zweiten Zugmittels 40, 42 eingezogen. Ferner wird Harz 32 eingebracht. Das Aushärten erfolgt dann wie üblich.

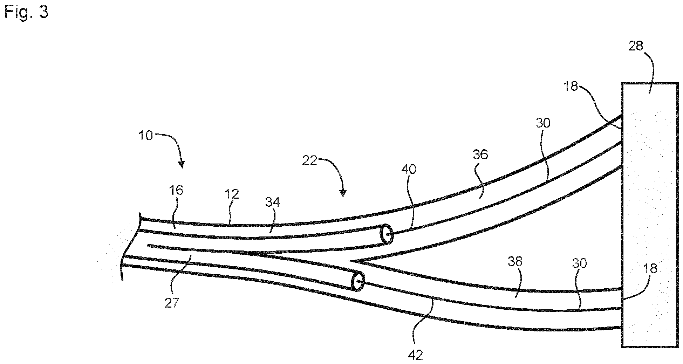

Fig. 3 zeigt eine Detailansicht einer Vereinigungsstelle 22. Die Vereinigungsstelle 22 wird von den Hohlräumen 16 gewöhnlich durch einen gemeinsamen Hohlraum 34 sowie einem ersten Hohlraum 36 und einem zweiten Hohlraum 38 gebildet, die sich an dem gemeinsamen Hohlraum 34 vereinigen. Auch mehr als zwei Vereinigungen sind denkbar.

Das Zugmittel 30 enthält ein erstes Zugmittel 40 und ein zweites Zugmittel 42. Die beiden Zugmittel 40, 42 werden jeweils in den ersten Hohlraum 36 und den zweiten Hohlraum 38 eingeführt und anschließend in dem gemeinsamen Hohlraum 34 zusammengeführt.

Die Faserbündel 27 sind so gestaltet, dass die Faserbündel 27 zusammen den gemeinsamen Hohlraum 34 in gewünschter Menge füllen. Es ist auch denkbar, das lediglich ein Faserbündel 27 verwendet wird, das in zwei Enden aufgeteilt wurde. Die Faserbündel 27 werden mittels des ersten und zweiten Zugmittels 40, 42 eingezogen. Ferner wird Harz 32 eingebracht. Das Aushärten erfolgt dann wie üblich.

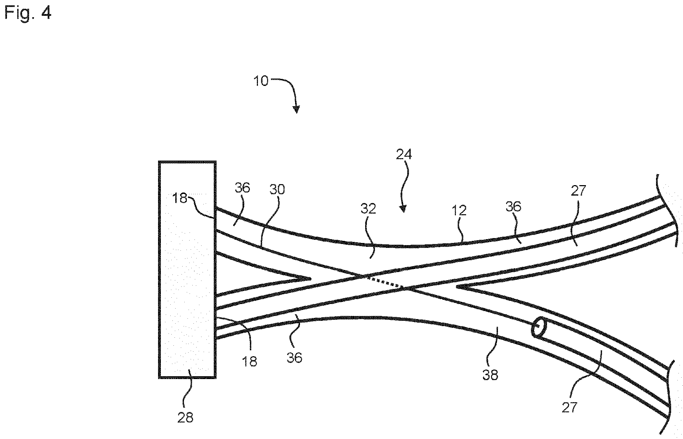

Fig. 4 zeigt eine Detailansicht einer Kreuzung 24. Die Kreuzung 24 wird von den Hohlräumen 16 gewöhnlich durch einen ersten Hohlraum 36 und einen zweiten Hohlraum 38 gebildet. Auch eine Mehrfachkreuzung ist möglich.

Das Zugmittel 30 kann nacheinander in den ersten Hohlraum 36 und den zweiten Hohlraum 38 eingeführt werden und ein jeweiliges Faserbündel 27 einziehen. Beim Einführen des Zugmittels 30 in den zweiten Hohlraum 36 kann das sich bereits im ersten Hohlraum 36 befindliche Faserbündel 27 von dem Zugmittel durchstoßen werden. Die Faserbündel 27 durchkreuzen dann sich an dieser Stelle. Ferner wird Harz 32 eingebracht. Das Aushärten erfolgt dann wie üblich.

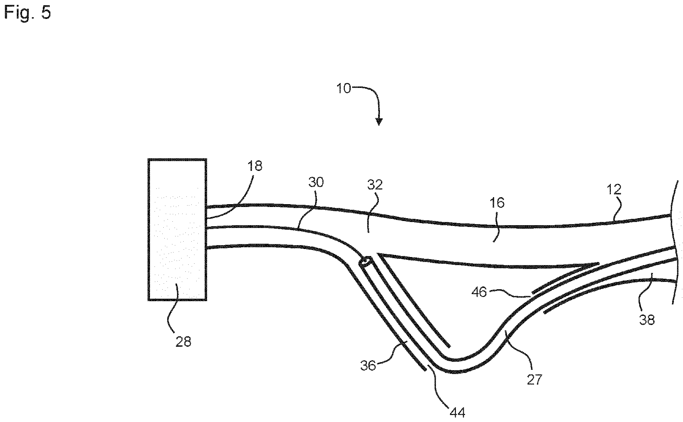

Fig. 5 zeigt eine Ansicht eines Bauteilkorpus 10 mit einer Abzweigung 20 und einer Vereinigung 22. Das Zugmittel 30 kann durch einen ersten Hohlraum 32 hindurchgeführt werden, bis es an einer Endöffnung 44 austritt. Anschließend wird das Zugmittel 30 über eine weitere Endöffnung 46 in einen zweiten Hohlraum 34 wieder eingeführt.

Durch das Zugmittel 30 kann das Faserbündel 27 in einem Schritt durch den ersten und zweiten Hohlraum 32, 34 gezogen werden. Vorzugsweise wird dieses Vorgehen bei der Verstärkung von Ösen und dergleichen gewählt. Das nicht im Hohlraum 16 befindliche Faserbündel 27 kann vor oder nach dem Aushärten weggeschnitten werden. Ferner wird Harz 32 eingebracht. Das Aushärten erfolgt dann wie üblich.

Insgesamt lassen sich mit dem hierin beschriebenen Verfahren komplexere Bauteile 26 als bisher erzeugen. Insbesondere ist es möglich eine Faserverstärkung in weniger Arbeitsschritten als bislang zu fertigen. Auch bislang schwer oder gar nicht herstellbare Konfigurationen sind möglich.

Um Fertigungsverfahren für faserverstärkte Bauteile 26 hinsichtlich ihrer Anwendungsvielfalt zu verbessern und vorzugsweise das Einbringen von Faserbündeln in eine größere Anzahl Geometrien, wie Abzweigungen, Vereinigungen und Kreuzungen, zu ermöglichen wird ein Herstellungsverfahren zum Herstellen eines Bauteils 26 aus einem Verbundwerkstoff mit einer aus Faserbündeln 27 und Harz 32 gebildeten Faserverstärkung vorgeschlagen. Zunächst wird ein Bauteilkorpus 10 mit einer Mehrzahl von rohrartigen Hohlräumen 16 bereitgestellt. In die Hohlräume wird aushärtbares Harz 32 eingebracht. Ferner wird eine Zugvorrichtung 28 für die Faserbündel 27 in wenigstens einen der Hohlräume 16 eingefügt. Die Zugvorrichtung 28 umfasst wenigstens ein Zugmittel 30, das geeignet ist, die Faserbündel 27 zu ziehen und Druckkraft zu übertragen. Durch Ziehen des Zugmittels 30 werden die Faserbündel 27 in die Hohlräume 16 eingezogen.

### Bezugszeichenliste:

- 10: Bauteilkorpus
- 12: erster Bereich
- 14: zweiter Bereich
- 16: Hohlraum
- 18: Endöffnung
- 20: Abzweigung
- 22: Vereinigungsstelle
- 24: Kreuzung
- 26: faserverstärktes Bauteil
- 27: Faserbündel
- 28: Zugvorrichtung
- 30: Zugmittel
- 32: härtbares Harz
- 34: gemeinsamer Hohlraum
- 36: erster Hohlraum
- 38: zweiter Hohlraum
- 40: erstes Zugmittel
- 42: zweites Zugmittel
- 44: Endöffnung
- 46: weitere Endöffnung

## Patentansprüche

1. Herstellungsverfahren zum Herstellen eines Bauteils (26) aus einem Verbundwerkstoff mit einer aus Faserbündeln (27) und Harz (32) gebildeten Faserverstärkung, wobei das Verfahren die Schritte umfasst:
a) Bereitstellen eines Bauteilkorpus (10) mit einer Mehrzahl von rohrartigen Hohlräumen (16);
b) Einbringen von Harz (32) und einer Zugvorrichtung (28) für die Faserbündel (27) in wenigstens einen der Hohlräume (16), wobei die Zugvorrichtung (28) wenigstens ein Zugmittel (30) aufweist, das ausgebildet ist, die Faserbündel (27) zu ziehen und Druckkraft zu übertragen und Einbringen des Zugmittels (30) durch eine Endöffnung (18) in einen ersten Hohlraum (36) und Herausführen des Zugmittels (30) aus einer Öffnung (44) des ersten Hohlraums (36) sowie anschließendes Einbringen des Zugmittels (30) durch eine Öffnung (46) in einen zweiten Hohlraum (38);
c) mittels des wenigstens einen Zugmittels (30), Einziehen wenigstens eines Faserbündels (27) in den Hohlraum (16) derart, dass das Faserbündel (27) teilweise außerhalb des Hohlraumes (16) zwischen zwei Öffnungen (44, 46) verläuft.

2. Herstellungsverfahren nach Anspruch 1, **dadurch gekennzeichnet, dass** Schritt c) das Entfernen des teilweise außerhalb des Hohlraumes (16) verlaufenden Faserbündels (27) umfasst.

3. Herstellungsverfahren nach einem der vorhergehenden Ansprüche, **dadurch gekennzeichnet, dass** Schritt a) umfasst:
a1) Ausbilden des Bauteilkorpus (10) mit einem ersten Bereich (12) aus einem ersten Polymermaterial und mit einem zweiten Bereich (14) aus einem zweiten Polymermaterial oder einem Metallmaterial; und/oder
a2) Ausbilden des Bauteilkorpus (10) mit einer größeren Menge ersten Polymermaterials und einer geringeren Menge zweiten Polymermaterials; und/oder
a3) Herstellen des Bauteilkorpus (10) durch additive Schichtfertigung.

4. Herstellungsverfahren nach einem der vorhergehenden Ansprüche, **dadurch gekennzeichnet, dass** Schritt a) umfasst:
a4) Auswählen eines ersten Polymermaterials aus einer Gruppe von Materialien, die in einem Lösungsmittel oder mechanisch lösbar sind, und Auswählen eines zweiten Polymermaterials aus einer Gruppe von Materialien, die in dem Lösungsmittel nicht lösbar sind; und/oder
a5) Auswählen des Metallmaterials aus einer Gruppe, die Metalle, beispielsweise Stahl, und Leichtmetalle, beispielsweise Aluminium oder Titan, oder jeweilige Legierungen enthält.

5. Herstellungsverfahren nach einem der vorhergehenden Ansprüche, **dadurch gekennzeichnet, dass** Schritt a) das Ausbilden des Bauteilkorpus (10) mit wenigstens einem ersten Bereich (12), der einen Mittelbereich der Hohlräume (16) definiert umfasst.

6. Herstellungsverfahren nach einem der vorhergehenden Ansprüche, **dadurch gekennzeichnet, dass** Schritt a) umfasst:
a6) Ausbilden des Bauteilkorpus (10) mit zweiten Bereichen (14), die Öffnungen (18) der Hohlräume (16) definieren; und/oder
a7) Ausbilden des Bauteilkorpus (10) mit zweiten Bereichen (14), die Krümmungsbereiche der Hohlräume (16) definieren; und/oder
a8) Ausbilden des Bauteilkorpus (10) mit zweiten Bereichen (14), die Abzweigungsbereiche (20) für die Faserverstärkung definieren; und/oder
a9) Ausbilden des Bauteilkorpus (10) mit wenigstens einem zweiten Bereich (12), der einen geraden Abschnitt des Hohlraums (16) definiert; und/oder
a10) Ausbilden des Bauteilkorpus (10) mit einer Mehrzahl von zweiten Bereichen (14), die voneinander beabstandet sind und mittels wenigstens einem ersten Bereich (12) gekoppelt sind.

7. Herstellungsverfahren nach Anspruch 5 und 6, **dadurch gekennzeichnet, dass** Schritt a) das Ausbilden des Bauteilkorpus (10) derart, dass wenigstens ein Hohlraum (16) durch wenigstens einen ersten Bereich (12) und einen zweiten Bereich (14) hindurch verläuft umfasst.

8. Verfahren nach einem der vorhergehenden Ansprüche, **dadurch gekennzeichnet, dass** Schritt b) und/oder c) umfasst:
- gleichzeitiges Einbringen des Harzes (32) in einem ungehärteten härtbaren Zustand und Einziehen des Faserbündels (27); oder
- Einbringen des Harzes (32) und Einziehen des Faserbündels (27) nacheinander, vorzugsweise zuerst das Faserbündel (27) und nachfolgend das Harz (32) in ungehärtetem härtbarem Zustand.

9. Verfahren nach einem der vorhergehenden Ansprüche, **dadurch gekennzeichnet, dass** Schritt c) umfasst:
c1) Einziehen der Faserbündel (27) unter Anlegen eines Ultraschallfeldes vorzugsweise in einem Flüssigkeitsbad; und/oder
c2) Einziehen eines Endlosfaserbündels (27) in wenigstens einen Hohlraum (16) mittels einer an das Endlosfaserbündel (27) angelegten mechanischen Zugkraft; und/oder
c3) Einziehen von Verstärkungsfasern, vorzugsweise Kohlenstofffasern und/oder Kohlenstofffaserbündel.

10. Herstellungsverfahren nach einem der vorhergehenden Ansprüche, **dadurch gekennzeichnet, dass** Schritt a) umfasst:
c4) Einziehen von Funktionsfasern, vorzugsweise Glasfasern und/oder Keramikfasern.

11. Herstellungsverfahren nach Anspruch 10, **dadurch gekennzeichnet, dass** Schritt a) umfasst:
c5) Einziehen von Glasfasern zum Bilden wenigstens eines Temperatur- und/oder Dehnmessstreifens; und/oder
c6) Einziehen von Keramikfasern, vorzugsweise zum Bilden eines Aktors oder Sensors, mehr vorzugsweise zum Bilden eines oder mehrerer piezoelektrischer Aktoren oder Sensoren.

12. Verfahren nach einem der vorhergehenden Ansprüche, **gekennzeichnet durch** den Schritt:
d) zumindest teilweises entfernen des ersten Polymermaterials.

13. Verfahren nach Anspruch 12,
**dadurch gekennzeichnet, dass** Schritt d) umfasst:
d1) Auflösen des ersten Polymermaterials in dem Lösungsmittel; und/oder
d2) Entfernen wenigstens eines ersten Bereichs (12); und/oder
d3) mechanisches Entfernen des gesamten ersten Polymermaterials von dem Bauteilkorpus (10).

14. Verfahren nach einem der vorhergehenden Ansprüche, **gekennzeichnet durch** den Schritt:
e) Aushärten des Harzes (32).

15. Verfahren nach einem der vorhergehenden Ansprüche, **dadurch gekennzeichnet, dass** Schritt c) umfasst:
c7) Aushärten des Harzes (32) nach Einbringen des Harzes (32) und der Endlosfasern in die Hohlräume (16).

## Claims

1. Production method for producing a component (26) from a composite material having a fibre reinforcement formed from fibre bundles (27) and resin (32), wherein the method comprises the steps:
a) providing a component body (10) having a plurality of tubular cavities (16);
b) introducing resin (32) and a pulling device (28) for the fibre bundles (27) into at least one of the cavities (16), wherein the pulling device (28) comprises at least one pulling means (30) which is designed to pull the fibre bundles (27) and to transmit compressive force, and introducing the pulling means (30) through an end opening (18) into a first cavity (36) and leading the pulling means (30) out of an opening (44) in the first cavity (36) and subsequently introducing the pulling means (30) through an opening (46) into a second cavity (38);
c) by means of the at least one pulling means (30), pulling at least one fibre bundle (27) into the cavity (16) in such a way that the fibre bundle (27) runs partially outside the cavity (16) between two openings (44, 46).

2. Production method according to Claim 1, **characterized in that** step c) comprises removing the fibre bundle (27) running partially outside the cavity (16).

3. Production method according to either of the preceding claims, **characterized in that** step a) comprises:
a1) forming the component body (10) with a first region (12) composed of a first polymer material and with a second region (14) composed of a second polymer material or a metal material; and/or
a2) forming the component body (10) with a greater quantity of first polymer material and a lower quantity of second polymer material; and/or
a3) producing the component body (10) by additive layer manufacturing.

4. Production method according to one of the preceding claims, **characterized in that** step a) comprises:
a4) selecting a first polymer material from a group of materials which are soluble in a solvent or mechanically detachable, and selecting a second polymer material from a group of materials which are not soluble in the solvent; and/or
a5) selecting the metal material from a group comprising metals, for example steel, and light metals, for example aluminium or titanium, or respective alloys.

5. Production method according to one of the preceding claims, **characterized in that** step a) comprises forming the component body (10) with at least one first region (12) which defines a middle region of the cavities (16).

6. Production method according to one of the preceding claims, **characterized in that** step a) comprises:
a6) forming the component body (10) with second regions (14) which define openings (18) in the cavities (16); and/or
a7) forming the component body (10) with second regions (14) which define regions of curvature of the cavities (16); and/or
a8) forming the component body (10) with second regions (14) which define branch regions (20) for the fibre reinforcement; and/or
a9) forming the component body (10) with at least one second region (12) which defines a straight portion of the cavity (16); and/or
a10) forming the component body (10) with a plurality of second regions (14) which are spaced apart from one another and coupled by means of at least one first region (12).

7. Production method according to Claims 5 and 6, **characterized in that** step a) comprises forming the component body (10) in such a way that at least one cavity (16) runs through at least one first region (12) and one second region (14).

8. Method according to one of the preceding claims, **characterized in that** step b) and/or c) comprises:
- simultaneously introducing the resin (32) in an unhardened, hardenable state and pulling in the fibre bundle (27); or
- successively introducing the resin (32) and pulling in the fibre bundle (27), preferably first the fibre bundle (27) and then the resin (32) in an unhardened, hardenable state.

9. Method according to one of the preceding claims, **characterized in that** step c) comprises:
c1) pulling in the fibre bundles (27) with application of an ultrasound field preferably in a liquid bath; and/or
c2) pulling a continuous-fibre bundle (27) into at least one cavity (16) by means of a mechanical pulling force applied to the continuous-fibre bundle (27); and/or
c3) pulling in reinforcing fibres, preferably carbon fibres and/or carbon-fibre bundles.

10. Production method according to one of the preceding claims, **characterized in that** step a) comprises:
c4) pulling in functional fibres, preferably glass fibres and/or ceramic fibres.

11. Production method according to Claim 10, **characterized in that** step a) comprises:
c5) pulling in glass fibres to form at least one temperature measurement strip and/or strain gauge; and/or c6) pulling in ceramic fibres, preferably to form an actuator or sensor, more preferably to form one or more piezoelectric actuators or sensors.

12. Method according to one of the preceding claims, **characterized by** the step:
d) at least partially removing the first polymer material.

13. Method according to Claim 12, **characterized in that** step d) comprises:
d1) dissolving the first polymer material in the solvent; and/or
d2) removing at least one first region (12); and/or
d3) mechanically removing all of the first polymer material from the component body (10).

14. Method according to one of the preceding claims, **characterized by** the step:
e) hardening the resin (32).

15. Method according to one of the preceding claims, **characterized in that** step c) comprises:
c7) hardening the resin (32) after the resin (32) and the continuous fibres have been introduced into the cavities (16).

## Revendications

1. Procédé de fabrication pour la fabrication d'un composant (26) en un matériau composite avec un renforcement à base de fibres formé à partir de faisceaux de fibres (27) et de résine (32), le procédé comprenant les étapes :
a) de fourniture d'un corps (10) de composant avec une multitude de cavités (16) tubulaires ;
b) d'introduction de résine (32) et d'un dispositif de traction (28) pour les faisceaux de fibres (27) dans au moins une des cavités (16), le dispositif de traction (28) comportant au moins un moyen de traction (30) qui est formé pour tirer les faisceaux de fibres (27) et transmettre une force de pression et d'introduction du moyen de traction (30) à travers une ouverture d'extrémité (18) dans une première cavité (36) et de guidage du moyen de traction (30) hors d'une ouverture (44) de la première cavité (36), puis d'introduction du moyen de traction (30) à travers une ouverture (46) dans une deuxième cavité (38) ;
c) au moyen de l'au moins un moyen de traction (30), d'insertion d'au moins un faisceau de fibres (27) dans la cavité (16) de telle manière que le faisceau de fibres (27) s'étend en partie à l'extérieur de la cavité (16) entre deux ouvertures (44, 46).

2. Procédé de fabrication selon la revendication 1, **caractérisé en ce que** l'étape c) comprend le retrait du faisceau de fibres (27) s'étendant en partie à l'extérieur de la cavité (16).

3. Procédé selon l'une des revendications précédentes, **caractérisé en ce que** l'étape a) comprend :
a1) la réalisation du corps (10) de composant avec une première zone (12) en un premier matériau polymère et avec une deuxième zone (14) en un deuxième matériau polymère ou en un matériau métallique ; et/ou
a2) la réalisation du corps (10) de composant avec une quantité plus importante d'un premier matériau polymère et une quantité inférieure d'un deuxième matériau polymère ; et/ou
a3) la fabrication du corps (10) de composant par fabrication additive par couches.

4. Procédé selon l'une des revendications précédentes, **caractérisé en ce que** l'étape a) comprend :
a4) le choix d'un premier matériau polymère dans un groupe de matériaux qui peuvent être dissous dans un solvant ou mécaniquement, et le choix d'un deuxième matériau polymère dans un groupe de matériaux qui ne peuvent pas être dissous dans le solvant ;
a5) le choix du matériau métallique dans un groupe qui contient des métaux, par exemple de l'acier, et des métaux légers, par exemple de l'aluminium ou du titane, ou des alliages respectifs.

5. Procédé de fabrication selon l'une des revendications précédentes, **caractérisé en ce que** l'étape a) comprend la réalisation du corps (10) de composant avec au moins une première zone (12), qui définit une zone centrale des cavités (16).

6. Procédé selon l'une des revendications précédentes, **caractérisé en ce que** l'étape a) comprend :
a6) la réalisation du corps (10) de composant avec des deuxièmes zones (14), qui définissant des ouvertures (18) des cavités (16) ; et/ou
a7) la réalisation du corps (10) de composant avec des deuxièmes zones (14), qui définissent des zones de courbure des cavités (16) ; et/ou
a8) la réalisation du corps (10) de composant avec des deuxièmes zones (14), qui définissent des zones de bifurcation (20) pour le renforcement à base de fibres ; et/ou
a9) la réalisation du corps (10) de composant avec au moins une deuxième zone (12), qui définit une section droite de la cavité (16) ; et/ou
a10) la réalisation du corps (10) de composant avec une multitude de deuxièmes zones (14), qui sont espacées les unes des autres et sont couplées au moyen d'au moins une première zone (12).

7. Procédé de fabrication selon les revendications 5 et 6, **caractérisé en ce que** l'étape a) comprend la réalisation du corps (10) de composant de telle manière qu'au moins une cavité (16) s'étend à travers au moins une première zone (12) et une deuxième région (14).

8. Procédé selon l'une des revendications précédentes, **caractérisé en ce que** l'étape b) et/ou l'étape c) comprennent :
- l'introduction simultanée de la résine (32) dans un état durcissable non durci et l'insertion du faisceau de fibres (27) ; ou
- l'introduction de la résine (32) et l'insertion du faisceau de fibres (27) consécutivement, de préférence d'abord le faisceau de fibres (27) et ensuite la résine (32), dans un état non durci, durcissable.

9. Procédé selon l'une des revendications précédentes, **caractérisé en ce que** l'étape c) comprend :
c1) l'insertion du faisceau de fibres (27) en appliquant un champ ultrasonore de préférence dans un bain de liquide ; et/ou
c2) l'insertion d'un faisceau de fibres continues (27) dans au moins une cavité (16) au moyen d'une force de traction mécanique appliquée sur le faisceau de fibres continues (27) ; et/ou
c3) l'insertion de fibres de renforcement, de préférence de fibres de carbone et/ou de faisceaux de fibres de carbone.

10. Procédé selon l'une des revendications précédentes, **caractérisé en ce que** l'étape a) comprend :
c4) l'insertion de fibres fonctionnelles, de préférence de fibres de verre et/ou de fibres de céramique.

11. Procédé de fabrication selon la revendication 10, **caractérisé en ce que** l'étape a) comprend :
c5) l'insertion de fibres de verre pour former au moins une jauge de température et/ou de contrainte ; et/ou
c6) l'insertion de fibres de céramique, de préférence pour former un actionneur ou un capteur, de manière davantage préférée pour former un ou plusieurs actionneurs ou capteurs piézoélectriques.

12. Procédé selon l'une des revendications précédentes, **caractérisé par** l'étape :
d) de retrait au moins partiel du premier matériau polymère.

13. Procédé selon la revendication 12, **caractérisé en ce que** l'étape d) comprend :
d1) la dissolution du premier matériau polymère dans le solvant ; et/ou
d2) le retrait d'au moins une première zone (12) ; et/ou
d3) le retrait mécanique de la totalité du premier matériau polymère du corps (10) de composant.

14. Procédé selon l'une des revendications précédentes, **caractérisé par** l'étape :
e) de durcissement de la résine (32).

15. Procédé selon l'une des revendications précédentes, **caractérisé en ce que** l'étape c) comprend :
c7) le durcissement de la résine (32) après l'introduction de la résine (32) et des faisceaux de fibres continues dans les cavités (16).
